# EUROPEAN PATENT SPECIFICATION

(11) **EP 3 477 907 B1**
(45) Date of publication and mention of the grant of the patent: **02.04.2025**
(21) Application number: 17827927.9
(22) Date of filing: 12.07.2017
(51) Int. Cl.: H04L 45/24, H04L 45/28, H04L 12/40, H04L 1/22

(54) **COMMUNICATION DEVICE FOR DUPLICATION NETWORK AND DATA PROCESSING METHOD THEREOF**
KOMMUNIKATIONSVORRICHTUNG FÜR DUPLIKATIONSNETZWERK UND DATENVERARBEITUNGSVERFAHREN DAFÜR
DISPOSITIF DE COMMUNICATION POUR RÉSEAU DE DUPLICATION ET SON PROCÉDÉ DE TRAITEMENT DE DONNÉES

(30) Priority: 12.07.2016 KR 20160088016
(43) Date of publication of application: 01.05.2019
(73) Proprietor: Korea Electrotechnology Research Institute, Changwon-si, Gyeongsangnam-do 51543 (KR)
(72) Inventor: OH, Hui Myoung, Seoul 05267 (KR); KIM, Jae Moon, Suwon-si Gyeonggi-do 16682 (KR); CHOI, Sung Soo, Seongnam-si Gyeonggi-do 13554 (KR); PARK, Chang Un, Suwon-si Gyeonggi-do 16620 (KR)
(74) Representative: Mammel und Maser Patentanwälte PartG mbB
(86) International application number: PCT/KR2017/007427
(87) International publication number: WO 2018/012857

(56) References cited:
- EP-A1- 2 148 473
- JP-A- 2011 528 883
- KR-A- 20130 095 154
- KR-A- 20140 065 453
- KR-A- 20150 067 505
- US-A1- 2009 168 643
- US-A1- 2013 322 271

## Description

### [Technical Field]

The present invention relates to a communication device for a redundancy network, and more particularly to, a communication device for a redundancy network and a method of processing data thereof that can reduce congestion between ports and frame transmission complexity by applying a buffer, a frame checker, and a port commander independently on each port basis.

### [Background Art]

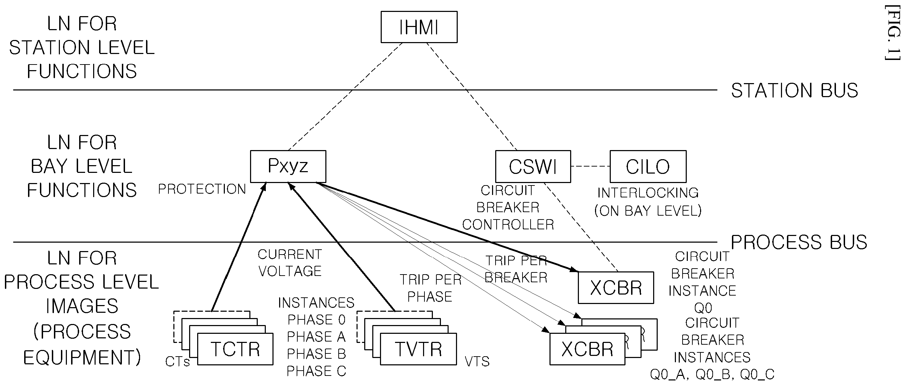

A structure of a digital substation according to the IEC 61850 standard is configured with a station level, a bay level, and a process level, as in an example of FIG. 1. In a process level corresponding to a subordinate layer, the digital substation is configured with devices for performing a function operation at an actual power line terminal such as circuit breakers for power interruption and sensors for power status monitoring such as a current transformer (CT) and a voltage transformer (VT). In a bay level corresponding to an intermediate layer, intelligent electronic devices (IEDs) that performs a protection function, a control function, and a monitoring function are located. Finally, in a station level corresponding to a superordinate layer, a human machine interface (HMI) device corresponding to interfacing between a user and a device related to substation control and management is disposed. In such a layered architecture, a process bus and a station bus correspond to information transmission interfaces between layers.

Recent substation systems are in the process of being converted from existing analog substations to digital substations, and it is expected that technology development will continue to future-oriented smart substations through full-digital substations that digitize station buses and process buses. The center of the digital substation is digitization of an analog signal, digital transmission technology of digitized information is core technology, and the substance of such digitization technology may be IEC 61850.

System stability is considered as an important factor for effective realization of a digital substation, and typical substation system stability factors include failure diagnosis and recovery time. As Ethernet is applied to substation station buses and process buses, redundancy communication is emerging to secure stability of Ethernet communication that may be the start of digital information transmission. As a typical redundancy communication technology, parallel redundancy protocol (PRP) and high-availability seamless redundancy (HSR) technologies of the IEC 62439-3 standard are designed so that communication stability is ensured in such a manner that even if one of redundancy communication links is disconnected due to a failure or the like, the other one is continuously connected and thus a failure recovery time does not occur.

However, because a complicated memory control method due to frame storage and transmission through a single reception buffer has been applied in the related art, congestion management of frames received in each port has been additionally required. There is no problem in a normal traffic situation during an operation of an actual function, but in a heavy traffic situation, all ports are deteriorated in functionality, and complexity of control algorithm for solving the problem increases, and as a result, there is a problem that it is difficult to apply control algorithm as it is in a superhigh speed communication system of a Gbps class.

US 2009/0168643 A1 discloses a system and method for fault isolation and auto-recovery in chained loop or ring networking systems.

From EP 2 148 473 A1 networks are known which are arranged in a ring topology connecting critical devices that require seamless communication in case of link or device failure. The network coupling device is connecting over a respective first and second port in a communication network operating with full duplex links, and inserts, when sending, in the ring two duplicate frames, one over each of its ports. The frames containing information allowing to identify these two frames as being duplicates of a pair.

From KR 2014 0065453 A or WO 2013/041355 A1, respectively, an ethernet environment is known, comprising multiple network devices which are coupled to each other in a ring structure. Each network device comprises a switch device with at least two ports for coupling to a communication path. During operation, at least two VLANs are simultaneously provided in the ring structure, and the sending of a data packet from the control device of a selected network device is performed via a port of the switch device in one of the two VLANs. In order to achieve this, the other port of the switch device of the selected network device is deactivated for the one VLAN. By using two VLANs, a redundant and reliable data transmission shall be achieved.

### [Disclosure]

### [Technical Problem]

The present invention has been made in view of solving the above-described problems and provides a communication device for a redundancy network and a method of processing data thereof that can reduce congestion between ports and frame transmission complexity by applying a buffer, a frame checker, a port commander, a frame maker, and the like independent on each port basis in the communication device for the redundancy network.

The present invention further provides a structure and a method of processing data thereof that can improve a performance of a communication device for a redundancy network with a link redundancy entity (LRE) function to be a key in implementing PRP and HSR technologies proposed by the international electronical committee (IEC) 62439-3 standard.

### [Technical Solution]

The present application solves the problem by a device and respective method according to the independent claims.

### [Advantageous Effects]

In accordance with a communication device for a redundancy network and a method of processing data thereof according to the present invention, by applying a buffer, a frame checker, a port commander, and a frame maker independent on each port basis to each of a plurality of ports including link redundancy entity (LRE) unit modules independent of each other according to each port characteristic, congestion between ports and frame transmission complexity can be reduced and thus it is possible to provide a communication device that can be applied to a high speed communication system of a Gbps-class, and the present invention can be easily applied to construction of a redundancy network of a digital substation system and the like.

### [Description of Drawings]

The accompany drawings, which are included to provide a further understanding of the present invention and are incorporated on and constitute a part of this specification illustrate embodiments of the present invention and together with the detailed description serve to explain technical ideas of the present invention.
FIG. 1 illustrates an example of a general digital substation functional structure.
FIG. 2 is a table illustrating an example of failure recovery requirements in the IEC 61850 standard.
FIG. 3 illustrates an example of a parallel redundancy protocol (PRP) redundancy network configuration.
FIG. 4 illustrates an example of a high-availability seamless redundancy (HSR) redundancy network configuration.
FIG. 5 illustrates an example of a PRP frame structure.
FIG. 6 illustrates an example of an HSR frame structure.
FIG. 7 illustrates an example of a functional structure of a communication device for a redundancy network according to the present invention.
FIG. 8 is a table illustrating a function of each unit module of a communication device for a redundancy network according to the present invention.
FIG. 9 illustrates another example of a functional structure of a communication device for a redundancy network according to the present invention.

### [Mode for Invention]

Hereinafter, the present invention will be described in detail with reference to the accompanying drawings. The same reference numbers are used throughout the drawings to refer to the same or like parts. Further, detailed descriptions of known functions and/or configurations are omitted. The following description will focus on the parts necessary for understanding the operation according to various embodiments, and a description of elements that may obscure the gist of the description is omitted. Also, some of the elements of the drawings may be exaggerated, omitted, or schematically illustrated. The size of each component does not entirely reflect the actual size, and therefore the contents described herein are not limited by the relative size or spacing of the components drawn in each figure.

In describing embodiments of the present invention, detailed descriptions of well-known functions and structures incorporated herein may be omitted to avoid obscuring the subject matter of the present invention. Terms used herein are defined in consideration of functions of the present invention and may vary depending on a user's or an operator's intention and usage. Therefore, the terms used herein should be understood based on the descriptions made herein. Terms used in detailed descriptions are to only describe exemplary embodiments of the present invention and are not intended to limit the present invention. Singular forms used here include a plurality of forms unless phrases explicitly represent an opposite meaning. In this description, an expression such as "comprising" or "having" used in this specification indicates characteristics, numbers, steps, operations, elements, and some or combinations thereof and does not exclude presence or a possibility of at least one other characteristic, number, step, operation, element, and some or combination thereof in addition to the described characteristics, numbers, steps, operations, elements, and some or combinations thereof.

Further, terms such as a first and a second may be used to describe various components, the components are not limited by the terms, and the terms may be used to distinguish one component from another component.

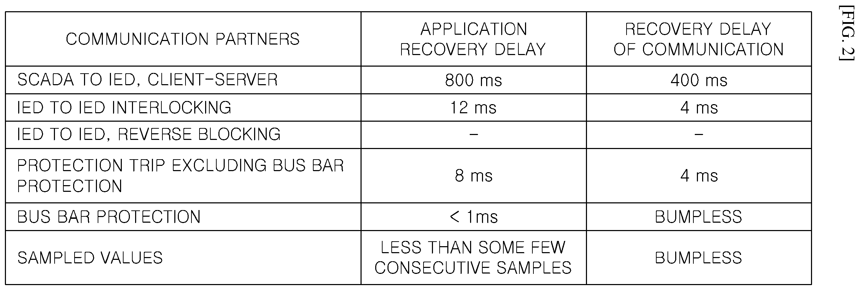

FIG. 2 is a table illustrating an example of failure recovery requirements by the IEC 61850 standard.

The failure recovery delay requirement of FIG. 2 is a maximum allowable value that can still maintain stability from a system point of view when recovery is performed within a suggested requirement time value, even if a failure or an error occurs in a system operation or communication process. It should be emphasized that a failure recovery delay allowable time value from a communication viewpoint is basically smaller than a failure recovery delay allowable time value from an application service viewpoint. In practice, a communication failure recovery delay allowable time value for bus bar protection and a sampled value is bumpless and corresponds to zero. In order to satisfy such a condition, a special communication method is required.

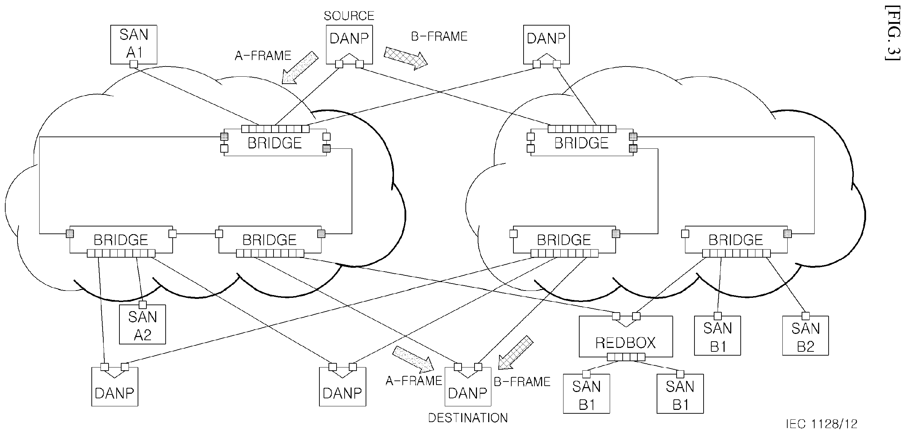

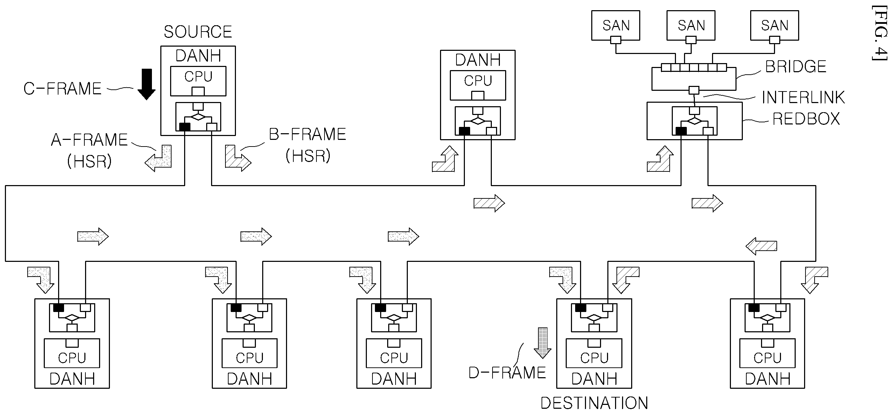

Hereinafter, a parallel redundancy protocol (PRP) and a high-availability seamless redundancy (HSR) of IEC 62439-3 as communication technology capable of satisfying bumpless requirements for failure recovery delay among redundancy communication technology related contents will be simply described with reference to FIGS. 3 and 4.

FIG. 3 illustrates an example of a PRP redundancy network configuration.

As illustrated in FIG. 3, the PRP is a method of performing a normal operation by still connecting the other one, even if a failure occurs in one network or link by communicating in the form of a double attached node implementing PRP (DANP), which is a redundancy connection node using two fully independent networks. A single attached node (SAN) corresponding to existing nodes may be connected to one network and operate or may use redundancy box implementing PRP (RedBoxP) in order to provide redundancy connection.

FIG. 4 illustrates an example of a high-availability seamless redundancy (HSR) redundancy network configuration.

As illustrated in FIG. 4, the HSR is configured with ring topology, and paths transmitted clockwise and counterclockwise secure independency to provide redundancy communication. In a ring, only double attached node implementing HSR (DANH) can be connected, and in order to connect existing SAN, redundancy box implementing HSR (RedBoxH) may be used. In particular, there is a quadruple port box (QuadBox) as a device that can connect a ring and a ring.

In a double attached node (DAN) or a RedBox to which the PRP and HSR are applied, because the number of lower communication ports is two, a transmission target frame should be copied and be each transmitted to two ports upon frame transmission, and a reception frame may be duplicated and received through both ports upon frame reception and thus a function of removing such duplication is required. For this reason, redundancy nodes have an LRE layer that performs duplication transmission and duplication removal functions. Because of presence of the LRE layer, communication is performed without recognition of the fact that redundancy is applied in lower communication in an application terminal, and even if a single failure occurs in a network or a link, communication stability may be bumplessly or seamlessly maintained in an application terminal.

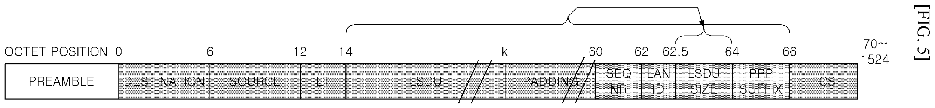

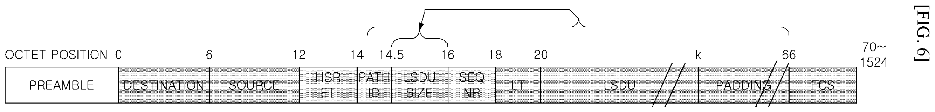

In order to realize a duplication frame generation and removal function of the LRE layer, a redundancy check trailer (RCT) in the case of PRP is added to an existing Ethernet frame structure and an HSR tag in the case of HSR is added to an existing Ethernet frame structure and they are illustrated in FIGS. 5 and 6. An added area includes a suffix (PPR uffix) or an ether-type (HSR ET) notifying that each protocol was applied and includes an ID (Lan ID/Path ID) for identifying a redundancy path, a link service data unit (LSDU) size for determining a frame length, and a sequence number (Seq Nr) for duplication detection.

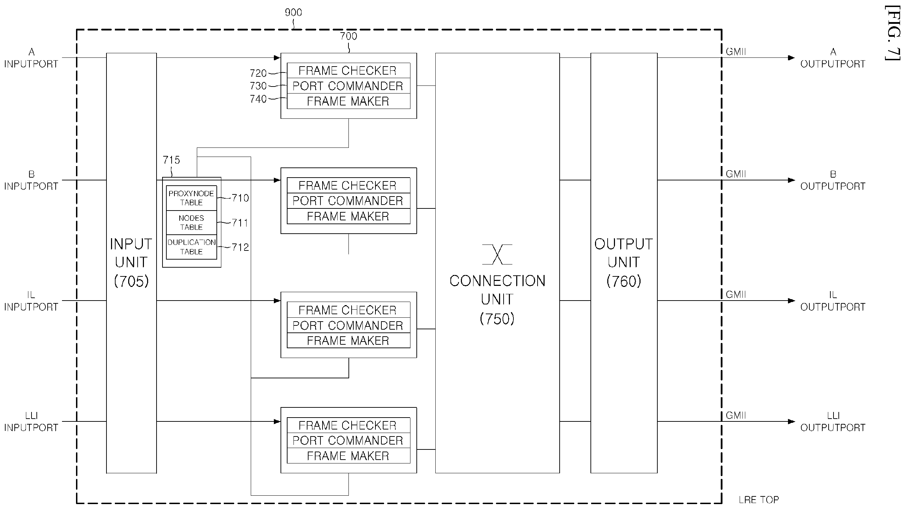

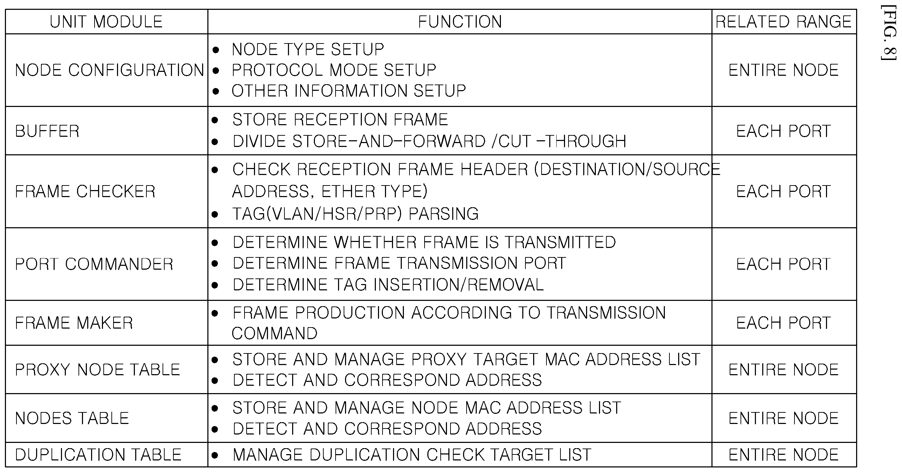

Hereinafter, a functional structure of a link redundancy entity (LRE), which is a communication device 900 for a redundancy network according to the present invention will be described with reference to FIGS. 7 and 8.

FIG. 7 illustrates an example of a functional structure of a communication device 900 for a redundancy network according to the present invention.

Referring to FIG. 7, a communication device 900 for a redundancy network according to an exemplary embodiment of the present invention, i.e., an LRE as a node that may be connected to at least one other node on a network has generally, for example, four ports, and the ports each include a port link layer interface (LLI), a port inter-link (IL), a port A (redundancy A), and a port B (redundancy B) to perform a redundancy data input and output processing. In nodes to which the PRP and HSR are applied, it may be determined whether to use ports according to an actual node type and such variability is reflected.

Functions of actually processing on each port basis may be somewhat different, but in a functional structure proposed in the present invention, by applying a method of differently setting and using one port hardware according to a node configuration after designing one port hardware, versatility of node use can be enhanced. Further, the number of ports is not limited to thereto.

FIG. 8 is a table illustrating a function of each unit module of a communication device 900 for a redundancy network according to the present invention.

A unit module 700 including a frame checker 720, a port commander 730 and a frame maker 740 in the structure of FIG. 7 is configured independently on each port basis, and each input port and output port have a one-to-one connection structure, and each unit performs a function of FIG. 8.

Because a management table 715 including a proxy node table 710, a nodes table 711, and a duplication table 712 is configured in a memory list format, trade-off between a performance and complexity may occur according to the number of secured port entries, and in a process in which associated unit modules obtains the result (detection or duplication, etc.) after accessing, processing delay may occur.

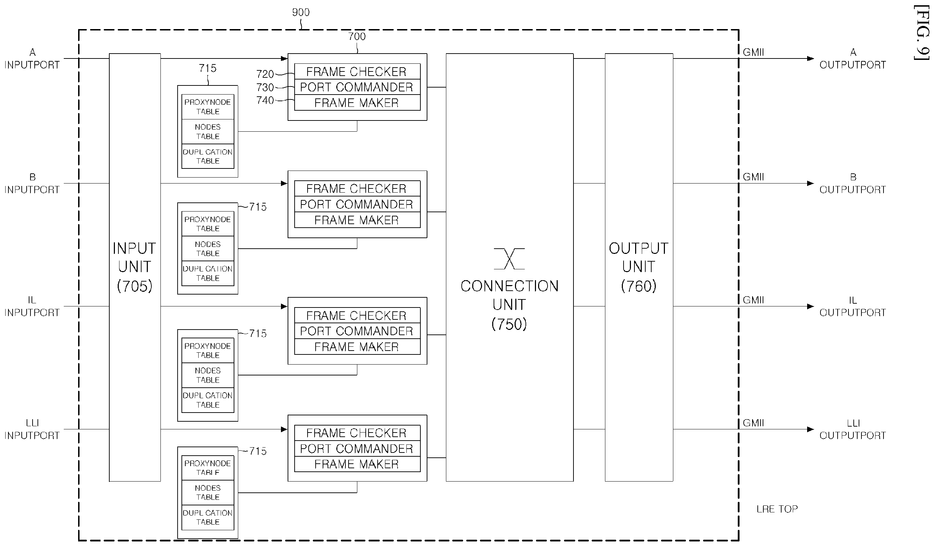

A structure of FIG. 9 is an exemplary embodiment in which a proxy node table 710, a nodes table 711, and a duplication table 712 are independently configured on each port basis. When a frame length is small in high-speed communication of Gbps class or higher, the number of accesses to the proxy node table 710, the nodes table 711, and the duplication table 712 at each port increases. In this case, because a bottleneck phenomenon may occur in each table, by independently locating tables in each port, the bottleneck phenomenon can be solved. In this case, information of each table should be synchronized in a frame processing unit.

Hereinafter, a communication device for a redundancy network of the present invention will be described in more detail with reference to FIGS. 8 and 9.

Referring to FIGS. 8 and 9, in a communication device 900 for a redundancy network of the present invention, i.e., an LRE, each of input ports A, B, IL, and LLI and output ports A, B, IL, and LLI has a one-to-one connection structure in each node. Here, for example, a gigabit media-independent interface (GMII) may be used as an interface device for connecting each of the input/output ports A, B, IL, and LLI.

Independent link redundancy entity (LRE) unit modules 700 are included according to each port characteristic between a plurality of input/output ports A, B, IL, and LLI having the same number of ports, for example, two data ports (e.g., IL and LLI) of an input unit 705 receive a transmission target frame and input redundancy ports A and B of the input unit 705 receive the same redundancy frame as the transmission target frame, at least one normal port (data port or redundancy port) between two ports transmits a corresponding transmission target frame through the output data port (IL, LLI) and copies each frame to duplicately transmit a redundancy frame to another node through the output redundancy port (A, B), and a next node similarly receives and transmits again data and thus redundancy data transmission can be performed. In the reception frame, two other ports may be selected according to whether ports other than IL and LLI among the input ports A, B, IL, and LLI are in a normal state. The input unit 705 may include wirings and necessary circuits for connecting input terminals corresponding to the input ports A, B, IL, and LLI and input terminals of the unit module 700 for each port.

In the present invention, by transmitting a frame through a buffer of each unit module in unit modules between a plurality of input ports and a plurality of output ports with a fully interconnected method without a data (frame) transmission related memory shared by the link redundancy entity (LRE) unit module 700 in addition to the management table 715, latency can be reduced, compared with a shared memory method.

For such redundancy data transmission, in a node configuration, a node type, a protocol mode such as a transmission frame protocol on a redundancy method to use, such as a parallel redundancy protocol (PRP), high-availability seamless redundancy (HSR), and virtual local area network (VLAN) according to a use method, and various setups necessary for other node operations may be previously set in each component of an LRE or a control device (not illustrated) for controlling each component of the LRE. A control device (not illustrated) performs the overall control of each component of the LRE.

As illustrated in FIG. 7, because only one proxy node table 710, nodes table 711, and duplication table 712 are provided in the communication device (LRE), the proxy node table 710, the nodes table 711, and the duplication table 712 may be commonly connected in each port, and in a case where the number of times of connection is large as in high-speed communication of Gbps class or higher, the proxy node table 710, the nodes table 711, and the duplication table 712 may be provided and independently operated in each unit module 700 on each port basis, as illustrated in FIG. 9.

As illustrated in FIG. 7, in a method of using for redundancy transmission of a transmission target frame by accessing and referring to a common access table, i.e., a management table 715 including a proxy node table 710, a nodes table 711, and a duplication table 712 for the above-described frame information in each unit module 700 with a time division method, because the tables may be configured with one memory, efficiency can be enhanced from a memory utilization viewpoint.

Further, when high-speed communication is required as in 10 Gbps, the number of times of accessing each table increases and thus real-time processing may become difficult. Therefore, as illustrated in FIG. 9, by synchronizing a management table 715 including a proxy node table 710, a nodes table 711, and a duplication table 712 independently configured in each unit module 700, the management table 715 may be used for redundancy transmission of a transmission target frame in each unit module 700. In this way, by distributing tables on each port basis, a congestion problem can be solved, and particularly, it is necessary to synchronize tables configured on each port basis, and information input/output may be synchronized in a frame processing unit. However, according to a table function, it is not necessary to synchronize information input/output in a frame unit, and it is possible to synchronize information input/output with various methods according to the purpose.

The proxy node table 710 stores and manages a list of proxy target media access control (MAC) addresses accessed to the network and is referred in the frame checker 720 to operate to correspond to a corresponding address upon detecting a corresponding address for data (frame) transmission and reception.

The nodes table 711 stores and manages a list of MAC addresses of nodes accessed to the network and is referred in the frame checker 720 to operate to correspond to a corresponding address upon detecting a corresponding address for data (frame) transmission and reception.

The duplication table 712 may store and manage list information about a normal status of duplicate data of each port for a duplication check target list, for example, nodes accessed to the network and is referred in the port commander 730 to provide information for determining whether to transmit duplicate data (frame). For example, when input ports IL and LLI and input redundancy ports A and B thereof are normally input as duplicate data of the respective IL and LLI, frames of the input ports IL and LLI may transmitted to output ports IL and LLI and be copied and transmitted to output redundancy ports A and B.

In the LRE unit module 700, the frame checker 720 checks whether the received transmission target frame is a target to be transmitted. For example, the frame checker 720 parses a header of the received transmission target frame and determines tag information about a destination address, a source address, an ether type, and a VLAN/HSR/PRP, as illustrated in FIGS. 5 and 6. The frame checker 720 may determine whether a node of a destination or a proxy node is normal when transmitting a frame with reference to a proxy node table 710 and a nodes table 711.

In the LRE unit module 700, the port commander 730 determines whether to transmit duplicate data (frame) with reference to the duplication table 712 according to the check result of the frame checker 720. For example, according to setup of a control device (not illustrated) according to whether duplicate data of each port of the duplication table 712 is normal, the port commander 730 may determine an output port to transmit a frame received by the corresponding port and determine a tag insertion or removal method according to a redundancy method such as VLAN/HSR/PRP. According to the control of the control device (not illustrated), the port commander 730 may determine an output port so as not to overlap with an output port determined by a port commander of another unit module. As in the case that the port commander 730 corresponding to the redundancy port A determines one of the output ports B, IL, and LLI as an output port, a port commander 730 of a unit module corresponding to each port may determine one of the other output ports as an output port to transmit a frame, except for output ports disposed on the same line.

When data (frame) transmission is not determined in the port commander 730, the frame maker 740 does not operate, but when the port commander 730 determines an output port to transmit a frame and a tag insertion or removal method, the frame maker 740 performs tag insertion or removal according to a corresponding method in a received transmission target frame according to corresponding determination and transmits data to any one output port through a corresponding transmission buffer (Tx buffer) of each port of an output unit 760 connected through a connection unit 750. The connection unit 750 may include wirings and necessary circuits for connecting output terminals of the frame maker 740 for each port to input terminals of the transmission buffer (Tx buffer) of the output unit 760 for each port.

In reception and transmission of a frame, in order to manage and reduce latency, the frame maker 740 may use a buffer of a store-and-forward buffer method or a cut-through buffer method to correspond to a redundancy method. For example, in the drawing, a frame received at an input port A may not be transmitted to an output port when transmission is unnecessary and may be transmitted to one of B, IL, and LLI output ports (in some case, may include A) according to a fully interconnected method when transmission is determined. When there are more output ports, the frame received at an input port A may be transmitted through other output ports. For example, while performing a buffering processing of a corresponding output port that performs relatively slow data transmission with a store-and-forward buffer method, it is possible to perform a buffering processing of another output port that performs relatively fast data transmission with a cut-through buffer method.

As described above, in a communication device for a redundancy network according to the present invention, by applying a buffer, a frame checker 720, a port commander 730, and a frame maker 740 independent on each port basis to each of a plurality of ports including a link redundancy entity (LRE) unit module independent of each other according to each port characteristic (e.g., a function characteristic of a buffer, a port checker, a port commander, and a frame maker of each port), congestion between ports and frame transmission complexity can be reduced and thus a communication device applicable to a superhigh speed communication system of a Gbps class can be provided.

While the present invention has been particularly illustrated and described with reference to exemplary embodiments thereof, it is to be understood that exemplary embodiments are provided for better understanding of the present invention and the present invention is not limited to the disclosed exemplary embodiments, but, on the contrary, those skilled in the art will appreciate that various modifications, additions and substitutions are possible, without departing from the essential characteristics of the invention. The invention is defined by the claims.

## Claims

1. A communication device (900) for a redundancy network, the communication device comprising:
unit modules (700) independently of each other according to each port characteristic between a plurality of input ports and a plurality of output ports and configured to perform a redundancy data input and output processing,
wherein a redundancy frame is received together with a transmission target frame through an input data port and an input redundancy port included in the plurality of input ports, but the transmission target frame and the redundancy frame are duplicately transmitted through an output data port and an output redundancy port to perform redundancy data transmission,
wherein each of the unit modules corresponding to each port comprises:
a frame checker (720) configured to check whether the received transmission target frame is a transmission target;
a port commander (730) configured to perform at least one of determination of an output port and determination of a tag insertion or removal method according to a check result of the frame checker; and
a frame maker (740) configured to transmit a frame through one of the plurality of output ports determined by the port commander by independently performing tag insertion or removal in the unit module according to a method determined by the port commander,
wherein the frame maker (740) performs a buffering processing of another output port that performs relatively fast data transmission with a cut-through buffer method while performing a buffering processing of a corresponding output port that performs relatively slow data transmission with a store-and-forward buffer method.

2. The communication device of claim 1, wherein a frame is transmitted through a buffer of each unit module with a fully interconnected method without a shared memory related to data transmission in unit modules between the plurality of input ports and the plurality of output ports.

3. The communication device of claim 1, wherein a common connection table on frame information referred in the unit modules comprises a proxy node table for storing a list of proxy target MAC addresses on the network, a nodes table for storing a list of MAC addresses of nodes on the network, and a duplication table for storing a list related to duplicate data of each port for nodes on the network, and is used for redundancy transmission of the transmission target frame in each of the unit modules (700) with a time division method.

4. The communication device of claim 1, wherein a proxy node table for storing a list of proxy target MAC addresses on the network configured independently of each of the unit modules, a nodes table for storing a list of MAC addresses of nodes on the network, and a duplication table for storing a list related to duplicate data of each port for nodes on the network are used for redundancy transmission of the transmission target frame in each of the unit modules by synchronizing.

5. A method of processing data of a communication device (900) for a redundancy network, the method comprising:
receiving a redundancy frame together with a transmission target frame through an input data port and an input redundancy port included in a plurality of input ports using unit modules independent of each other according to each port characteristic between a plurality of input ports and a plurality of output ports and configured to perform a duplicate data input and output processing, and duplicately transmitting the transmission target frame and the redundancy frame through an output data port and an output redundancy port to perform redundancy data transmission,
wherein each of the unit modules (700) corresponding to each port comprises:
a frame checker (720) configured to check whether the received transmission target frame is a transmission target;
a port commander (730) configured to perform at least one of determination of an output port and determination of a tag insertion or removal method according to a check result of the frame checker; and
a frame maker (740) configured to transmit a frame through one of the plurality of output ports determined by the port commander by independently performing tag insertion or removal in the unit module according to a method determined by the port commander,
wherein the frame maker (740) performs a buffering processing of another output port that performs relatively fast data transmission with a cut-through buffer method while performing a buffering processing of a corresponding output port that performs relatively slow data transmission with a store-and-forward buffer method.

## Patentansprüche

1. Eine Kommunikationsvorrichtung (900) für ein Redundanznetzwerk, wobei die Kommunikationsvorrichtung umfasst:
Einheit-Module (700) unabhängig voneinander gemäß jeder Port-Charakteristik zwischen einer Vielzahl von Eingangs-Ports und einer Vielzahl von Ausgangs-Ports und konfiguriert, um eine Redundanzdaten-Eingangs- und Ausgangsverarbeitung durchzuführen,
wobei ein Redundanzrahmen zusammen mit einem Übertragungszielrahmen über einen Eingangsdatenport und einen Eingangsredundanzport, die in der Vielzahl von Eingangsports enthalten sind, empfangen wird, aber der Übertragungszielrahmen und der Redundanzrahmen doppelt über einen Ausgangsdatenport und einen Ausgangsredundanzport übertragen werden, um eine Redundanzdatenübertragung durchzuführen,
wobei jedes der jedem Anschluss entsprechenden Einheitsmodule umfasst:
einen Rahmenprüfer (720), der so konfiguriert ist, dass er prüft, ob der empfangene Übertragungszielrahmen ein Übertragungsziel ist;
einen Port-Commander (730), der so konfiguriert ist, dass er mindestens eine Bestimmung eines Ausgangsports und eine Bestimmung eines Markierungseinfügungs- oder -entfernungsverfahrens gemäß einem Prüfergebnis des Rahmenprüfers durchführt; und
einen Rahmenersteller (740), der so konfiguriert ist, dass er einen Rahmen über einen der mehreren Ausgangsanschlüsse, die von dem Port-Commander bestimmt werden, überträgt, indem er unabhängig das Einsetzen oder Entfernen einer Merkierung in dem Einheitsmodul gemäß einem von dem Port-Commander bestimmten Verfahren durchführt,
wobei der Rahmenersteller(740) eine Pufferungsverarbeitung eines anderen Ausgangsports, der eine relativ schnelle Datenübertragung durchführt, mit einem Cut-Through-Pufferverfahren durchführt, während er eine Pufferungsverarbeitung eines entsprechenden Ausgangsports, der eine relativ langsame Datenübertragung durchführt, mit einem Speicher- und Vorwärts-Pufferverfahren durchführt.

2. Kommunikationsvorrichtung nach Anspruch 1, wobei ein Rahmen durch einen Puffer jedes Einheitsmoduls mit einem vollständig verbundenen Verfahren ohne einen gemeinsamen Speicher übertragen wird, der sich auf die Datenübertragung in Einheitsmodulen zwischen der Vielzahl von Eingangsports und der Vielzahl von Ausgangsports bezieht.

3. Kommunikationsvorrichtung nach Anspruch 1, wobei eine gemeinsame Verbindungstabelle für Rahmeninformationen, auf die in den Einheitsmodulen Bezug genommen wird, eine Proxy-Knotentabelle zum Speichern einer Liste von Proxy-Ziel-MAC-Adressen im Netzwerk, eine Knotentabelle zum Speichern einer Liste von MAC-Adressen von Knoten im Netzwerk und eine Duplizierungstabelle zum Speichern einer Liste, die sich auf doppelte Daten jedes Ports für Knoten im Netzwerk bezieht, umfasst und für die Redundanzübertragung des Übertragungszielrahmens in jedem der Einheitsmodule (700) mit einem Zeitteilungsverfahren verwendet wird.

4. Kommunikationsvorrichtung nach Anspruch 1, wobei eine Proxy-Knotentabelle zum Speichern einer Liste von Proxy-Ziel-MAC-Adressen auf dem Netzwerk, die unabhängig von jedem der Einheitsmodule konfiguriert ist, eine Knotentabelle zum Speichern einer Liste von MAC-Adressen von Knoten auf dem Netzwerk und eine Duplizierungstabelle zum Speichern einer Liste, die sich auf doppelte Daten jedes Ports für Knoten auf dem Netzwerk bezieht, für Redundanzübertragung des Übertragungszielrahmens in jedem der Einheitsmodule durch Synchronisierung verwendet werden.

5. Verfahren zur Verarbeitung von Daten eines Kommunikationsgeräts (900) für ein Redundanznetzwerk, wobei das Verfahren umfasst: Empfangen eines Redundanzrahmens zusammen mit einem Übertragungszielrahmen über einen Eingangsdatenport und einen Eingangsredundanzport, die in einer Vielzahl von Eingangsports enthalten sind, unter Verwendung von Einheitsmodulen, die voneinander unabhängig sind, gemäß jeder Portcharakteristik zwischen einer Vielzahl von Eingangsports und einer Vielzahl von Ausgangsports und konfiguriert sind, um eine doppelte Dateneingabe- und - ausgabeverarbeitung durchzuführen, und doppeltes Übertragen des Übertragungszielrahmens und des Redundanzrahmens über einen Ausgangsdatenport und einen Ausgangsredundanzport, um eine Redundanzdatenübertragung durchzuführen,
wobei jedes der Einheitsmodule (700), die jedem Anschluss entsprechen, umfasst:
einen Rahmenprüfer (720), der so konfiguriert ist, dass er prüft, ob der empfangene Übertragungszielrahmen ein Übertragungsziel ist;
einen Port-Commander (730), der so konfiguriert ist, dass er mindestens eine Bestimmung eines Ausgangsports und eine Bestimmung eines Markierungseinfügungs- oder -entfernungsverfahrens gemäß einem Prüfergebnis des Rahmenprüfers durchführt; und
einen Rahmenersteller (740), der so konfiguriert ist, dass er einen Rahmen über einen der mehreren Ausgangsanschlüsse, die von dem Port-Commander bestimmt werden, überträgt, indem er unabhängig das Einfügen oder Entfernen einer Markierung in dem Einheitsmodul gemäß einem von dem Port-Commander bestimmten Verfahren durchführt,
wobei der Rahmenersteller (740) eine Pufferungsverarbeitung eines anderen Ausgangsports, der eine relativ schnelle Datenübertragung durchführt, mit einem Cut-Through-Pufferverfahren durchführt, während er eine Pufferungsverarbeitung eines entsprechenden Ausgangsports, der eine relativ langsame Datenübertragung durchführt, mit einem Speicher- und Vorwärts-Pufferverfahren durchführt.

## Revendications

1. Dispositif de communication (900) pour un réseau redondant, le dispositif de communication comprenant:
des modules d'unité (700) indépendants les uns des autres en fonction de chaque caractéristique de port entre une pluralité de ports d'entrée et une pluralité de ports de sortie et configurés pour effectuer un traitement redondant d'entrée et de sortie de données,
dans lequel une trame de redondance est reçue en même temps qu'une trame cible de transmission par un port de données d'entrée et un port de redondance d'entrée inclus dans la pluralité de ports d'entrée, mais la trame cible de transmission et la trame de redondance sont transmises en double par un port de données de sortie et un port de redondance de sortie pour effectuer une transmission de données de redondance,
dans lequel chacun des modules d'unité correspondant à chaque port comprend:
un vérificateur de trame (720) configuré pour vérifier si la trame cible de transmission reçue est une cible de transmission;
un commandant de port (730) configuré pour effectuer au moins l'une des opérations suivantes: détermination d'un port de sortie et détermination d'une méthode d'insertion ou de retrait d'étiquette en fonction d'un résultat de vérification du vérificateur de trames; et
un fabricant de trames (740) configuré pour transmettre une trame par l'un des ports de sortie déterminés par le commandant de port en effectuant indépendamment l'insertion ou le retrait d'étiquettes dans le module d'unité selon une méthode déterminée par le commandant de port,
dans lequel le fabricant de trames (740) effectue un traitement de mise en mémoire tampon d'un autre port de sortie qui effectue une transmission de données relativement rapide avec une méthode de mise en mémoire tampon à travers tout en effectuant un traitement de mise en mémoire tampon d'un port de sortie correspondant qui effectue une transmission de données relativement lente avec une méthode de mise en mémoire tampon de stockage et d'acheminement.

2. Le dispositif de communication de la revendication 1, dans lequel une trame est transmise à travers un tampon de chaque module d'unité avec une méthode entièrement interconnectée sans mémoire partagée liée à la transmission de données dans les modules d'unité entre la pluralité de ports d'entrée et la pluralité de ports de sortie.

3. Le dispositif de communication de la revendication 1, dans lequel une table de connexion commune sur les informations de trame référencées dans les modules d'unité comprend une table de nœuds proxy pour stocker une liste d'adresses MAC cibles proxy sur le réseau, une table de nœuds pour stocker une liste d'adresses MAC de nœuds sur le réseau, et une table de duplication pour stocker une liste relative aux données dupliquées de chaque port pour les nœuds sur le réseau, et est utilisée pour la transmission de redondance de la trame cible de transmission dans chacun des modules d'unité (700) avec une méthode de division temporelle.

4. Le dispositif de communication de la revendication 1, dans lequel une table de nœuds proxy pour stocker une liste d'adresses MAC cibles proxy sur le réseau configuré indépendamment de chacun des modules d'unité, une table de nœuds pour stocker une liste d'adresses MAC de nœuds sur le réseau, et une table de duplication pour stocker une liste relative aux données dupliquées de chaque port pour les nœuds sur le réseau sont utilisées pour transmission redondante de la trame cible de transmission dans chacun des modules d'unité en se synchronisant.

5. Méthode de traitement des données d'un dispositif de communication (900) pour un réseau redondant, comprenant:
réception d'une trame de redondance et d'une trame cible de transmission par un port de données d'entrée et un port de redondance d'entrée inclus dans une pluralité de ports d'entrée utilisant des modules d'unité indépendants les uns des autres en fonction de chaque caractéristique de port entre une pluralité de ports d'entrée et une pluralité de ports de sortie et configurés pour effectuer un traitement d'entrée et de sortie de données en double, et transmission en double de la trame cible de transmission et de la trame de redondance par un port de données de sortie et un port de redondance de sortie afin d'effectuer une transmission de données en redondance,
dans lequel chacun des modules d'unité (700) correspondant à chaque port comprend:
un vérificateur de trame (720) configuré pour vérifier si la trame cible de transmission reçue est une cible de transmission;
un commandant de port (730) configuré pour effectuer au moins l'une des opérations suivantes : détermination d'un port de sortie et détermination d'une méthode d'insertion ou de retrait d'étiquette en fonction d'un résultat de vérification du vérificateur de trames; et
un fabricant de trames (740) configuré pour transmettre une trame par l'un des ports de sortie déterminés par le commandant de port en effectuant indépendamment l'insertion ou le retrait d'étiquettes dans le module d'unité selon une méthode déterminée par le commandant de port,
dans lequel le fabricant de trames (740) effectue un traitement de mise en mémoire tampon d'un autre port de sortie qui effectue une transmission de données relativement rapide avec une méthode de mise en mémoire tampon à travers tout en effectuant un traitement de mise en mémoire tampon d'un port de sortie correspondant qui effectue une transmission de données relativement lente avec une méthode de mise en mémoire tampon de stockage et d'acheminement.
